# EUROPÄISCHE PATENTSCHRIFT

(11) **EP 2 567 222 B1**
(45) Veröffentlichungstag und Bekanntmachung des Hinweises auf die Patenterteilung: **04.11.2015**
(21) Anmeldenummer: 11735765.7
(22) Anmeldetag: 02.05.2011
(51) Int. Cl.: G01N 25/18, G01N 21/00, G02B 27/00, G02B 13/14, G01B 21/08, G01N 21/17, G01B 11/06, G01N 25/72

(54) **VORRICHTUNG ZUR BERÜHRUNGSLOSEN UND ZERSTÖRUNGSFREIEN PRÜFUNG VON OBERFLÄCHEN**
DEVICE FOR THE CONTACTLESS AND NONDESTRUCTIVE TESTING OF SURFACES
DISPOSITIF DE CONTRÔLE NON DESTRUCTIF ET SANS CONTACT DE SURFACES

(30) Priorität: 03.05.2010 CH 6672010
(43) Veröffentlichungstag der Anmeldung: 13.03.2013
(73) Patentinhaber: Winterthur Instruments AG, 8406 Winterthur (CH)
(72) Erfinder: REINKE, Nils, CH-8405 Winterthur (CH); BARISKA, Andor, CH-8008 Zürich (CH)
(74) Vertreter: Liebetanz, Michael
(86) Internationale Anmeldenummer: PCT/CH2011/000097
(87) Internationale Veröffentlichungsnummer: WO 2011/137547

(56) Entgegenhaltungen:
- WO-A1-95/16907
- DE-C1- 19 830 473
- US-A- 3 206 603
- US-A1- 2008 185 520

## Beschreibung

### TECHNISCHES GEBIET

Die Erfindung betrifft eine Vorrichtung zur berührungslosen und zerstörungsfreien Prüfung einer Oberfläche durch die Messung seiner Infrarotstrahlung.

### STAND DER TECHNIK

Die berührungslose Untersuchung von Oberflächen basierend auf der Erzeugung und Messung von transienten oder periodischen Erwärmungs- und Abkühlungsprözessen, bedingt eine Anregungsquelle zur Erwärmung der zu untersuchenden Oberfläche sowie einen Infrarot-Detektor, der die von der erwärmten Oberfläche ausgehende Infrarot-Strahlung misst. Dieses Verfahren wird als Photothermie bezeichnet, falls zur Anregung elektromagnetische Strahlung im ultra-violetten, optischen oder infraroten Bereich benutzt wird. Dabei kann zum Beispiel die Anregungsstrahlung von der Rückseite einer Oberfläche eintreffen, während die von der Oberfläche emittierte Infrarot-Strahlung auf der Vorderseite aufgezeichnet wird, wie von Parker et al. (1961) beschrieben.

Bei einer von Leung und Tam (1984) beschriebenen Konfiguration erfolgen Anregung und Detektion auf der gleichen Seite der Oberfläche. Diese Konfiguration bietet den Vorteil, dass auch Oberflächen, die nur von einer Seite zugänglich sind, untersucht werden können und damit wesentlich vielseitigere Einsatzmöglichkeiten.

Üblicherweise werden für photothermische Untersuchungen Laser als Anregungsquellen eingesetzt, wie z.B. beschrieben von Eyrer und Busse (1984). Vorteile von Laserstrahlung für die Anregung sind die einfache Strahllenkung sowie die hohe Energiedichte aufgrund der Strahlbündelung. Diese Vorteile ermöglichen eine örtlich präzise Positionierung und abgestimmte Dosierung der Anregungsstrahlung. Für die Anwendung ausserhalb einer kontrollierten Schutzumgebung sind Laseranregungen jedoch mit grossen Nachteilen verbunden. Für die photothermische Prüfung müssen leistungsstarke Laser (beispielsweise mit 14 W optischer Leistung mit Pulslängen von bis zu 0.1s, siehe Kurzdokumentation Paintchecker modular der Firma Optisense) eingesetzt werden, um eine messbare Temperaturerhöhung zu erreichen, wodurch eine Gefahr für Mensch und Umwelt entsteht (solche Laser fallen in Laserklassen 3 oder 4). Daher sind entsprechende Schutzmassnahmen notwendig und das Messsystem kann nur durch geschultes Bedienungspersonal betrieben werden. Zudem sind geeignete Laseranregungen vergleichsweise teuer. Es entsteht also in der Anschaffung wie auch im laufenden Betrieb eines Prüfgeräts mit Laseranregung ein erhöhter Kostenaufwand.

In WO 95/16907 ist eine Vorrichtung für das photothermische Prüfen von Oberflächen mit Laseranregung beschrieben. Der Anregungsstrahl wird auf einen Spiegel fokussiert, der den Anregungsstrahl durch eine Öffnung in der Sensor-Sammellinse auf die Oberfläche des Prüflings ablenkt. Neben den mit der Verwendung einer Laserquelle verbundenen Nachteilen hat diese Anordnung noch einen weiteren Nachteil: Wegen der Abschattung durch den Reflektorspiegel und wegen dem Loch in der Sammellinse geht ein Teil der aufzufangenden vom Prüfling emittierten Infrarot-Strahlung verloren.

Wie Laserquellen müssen alternative elektromagnetische Strahlungsquellen, beispielsweise Blitzlampen, zur Anregung eine genügend hohe Energiedichte aufweisen, um eine messbare Temperaturerhöhung im Prüfbereich der zu untersuchenden Oberfläche zu erzielen. Gegebenenfalls können mehrere Blitzlampen eingesetzt werden, um beispielsweise bei einem örtlich verbreiteten Abstrahlungsverhalten, möglichst viel Energie im Prüfbereich zu deponieren. Durch ihr räumlich breites Abstrahlungsverhalten geht der Hauptteil der Anregungsstrahlung verloren. Daher sind Blitzlampen als thermische Anregungsquellen für das photothermische Prüfverfahren bisher nur wenig geeignet.

In WO 98/05949 ist eine Vorrichtung beschrieben, bei der mindestens vier Blitzlampen mit je 6kJ optischer Energie zur Anregung eines Prüflings eingesetzt werden sollen. Bei den üblichen Abbrennzeiten einer Blitzlampe von 5ms entsprich dies einer kurzzeitigen optischen Leistung von 1.2MW, wobei jedoch nur ein Bruchteil der Leistung im Prüfbereich deponiert wird. Der Grossteil der optischen Strahlung fällt nicht in den Prüfbereich. Um den rückwärts abgestrahlten Teil nicht ganz zu verlieren werden hinter den Lampen üblicherweise Reflektoren platziert. Der Infrarot-Sensor muss dann seitlich zu der/den Anregungsquelle/n platziert sein, da hinter der/den Anregungsquelle/n keine Infrarot-Strahlung aus dem Messbereich detektierbar ist. Diese seitliche Platzierung wiederum birgt entscheidende Nachteile: die Messvorrichtung wird durch die parallele Anordnung räumlich ausgedehnt und die Strahlengänge für Anregung und Detektion können nicht kollinear verlaufen. Dadurch trifft entweder die Anregungsstrahlung unter einem abgeflachten Winkel auf der zu prüfenden Oberfläche oder die Detektionsstrahlung wird unter einem abgeflachten Winkel detektiert. Der abgeflachte Winkel führt zu Verlusten bei der Erwärmung der Oberfläche öder/und bei der Detektion seiner Detektionsstrahlung und einem grösseren Messaufbau.

Eine Vorrichtung mit den Merkmalen des Oberbegriffs des Anspruchs 1 ist aus der DE 198 30 473 bekannt, bei der die infraroten Strahlungsquellen durch eine rotierende Abdeckeinrichtung in Intervallen abgedeckt und freigegeben werden.

Eine weitere zerstörungsfreie IR-Testvorrichtung, mit einer fokussierenden Strahloptik, ist aus US3206603 bekannt.

### DARSTELLUNG DER ERFINDUNG

Ausgehend von diesem Stand der Technik betrifft die Erfindung eine Vorrichtung zur berührungslosen und zerstörungsfreien Prüfung von Oberflächen durch die Untersuchung von aktiv angeregten thermischen Vorgängen, die kostengünstiger herstellbar ist und einen möglichst einfachen praktischen Einsatz ermöglicht.

Diese und weitere Aufgaben und Vorteile der vorliegenden Erfindung werden durch die Merkmale des Patentanspruchs 1 gelöst.

Der Kern der Erfindung besteht in einer Anordnung von einer Anregungsquelle und einer Reflexionsvorrichtung für die von der Anregungsquelle abstrahlten Anregungsstrahlung, wobei die Reflexionsvorrichtung die in weite Raumbereiche abgestrahlte Anregungsstrahlung bündelt und einen Prüfbereich einer zu untersuchenden Oberfläche durch eine Öffnung der Reflexionsvorrichtung mit der Anregungsstrahlung beaufschlagt und dass ein Strahlungsdetektor die durch die Erwärmung erzeugte Infrarot-Strahlung (im folgenden Detektionsstrahlung genannt) aus dem Prüfbereich durch dieselbe Öffnung detektiert.

Um eine möglichst homogene Ausleuchtung im Prüfbereich zu erreichen, wird in einer besonders bevorzugten Ausgestaltung der Erfindung eine ringförmige Anregungsquelle benutzt.

Gemäss einer weiteren Ausgestaltung der Erfindung ist im Zentrum der Anregungsqüelle in einer Aussparung eine Infrarot-Sammellinse oder eine .Infrarot= Spiegeloptik platziert, die die Detektionsstrahlung auf den Infrarot-Sensor fokussiert.

Durch diese Anordnung entsteht eine Reihe von Vorteilen gegenüber den aus dem Stand der Technik bekannten Vorrichtungen. Da die beschriebene Anordnung einen räumlich weiten Schnittbereich zwischen Anregungs- und Detektionsstrahlung bietet, ist die Vorrichtung robust gegenüber Abstandsänderungen und Verkippung zwischen der Anordnung und der zu untersuchenden Oberfläche. In der Ausgestaltung der Erfindung, in der der Detektionsstrahlung aus dem Prüfbereich durch eine Aussparung in der Anregungsquelle zum Detektor geführt wird, ist die Vorrichtung sehr kompakt aufbaubar und Strahlungsverluste werden minimiert, weil sowohl Anregungs- als auch Detektionsstrählung- weitgehend senkrecht zum Prüfbereich verlaufen. In einer Ausgestaltung der Erfindung ist das reflektierende Gehäuse ein kegelstumpfförmiger Trichter, durch dessen verengte Öffnung der Anregungs- und Detektionsstrahlung tritt. Durch die sich verjüngende Form wird die Anregungsstrahlung gebündelt. Dadurch wird eine maximale Energieeffizienz erreicht, was für eine kompakte Bauform vorteilhaft ist und anfallende Wärmeverluste der Vorrichtung minimiert.

In den abhängigen Ansprüchen sind vorteilhafte Ausgestaltungen und Weiterbildungen der Erfindung angegeben.

In einer bevorzugten Ausgestaltung der Erfindung werden zur Anregung eine ringförmige oder mehrere ringförmig angeordnete Blitzlampen verwendet. Gasentladungslampen sind aufgrund ihrer hohen Effizienz und der hohen erzielbaren Leistungsdichten besonders als Anregungsquellen geeignet. Das erzeugte Lichtspektrum von Xenon-Gasentladungslampen entspricht weitgehend der Planckschen Strahlungskurve bei einer Temperatur von etwa 5000K. Der grösste Teil der erzeugten Anregungsstrahlung entsteht im sichtbaren Spektralbereich zwischen 400nm und 800nm, wobei ein nicht vernachlässigbarer Anteil der erzeugten Anregungsstrahlung im infraroten Wellenlängenbereich entsteht. Das breite Anregungsspektrum ist besonders vorteilhaft, da unabhängig der spektralen Eigenschaften der zu untersuchenden Oberfläche elektromagnetische Strahlung absorbiert wird.

Bei einer bevorzugten Ausführungsform werden als inkohärente Lichtquelle eine oder mehrere LEDs verwendet. Besonders vorteilhaft ist eine ringförmige Anordnung von LEDs. Der Einsatz von LEDs bietet den Vorteil, dass elektromagnetische Strahlung in einem definierten Spektralbereich erzeugt werden kann. Allerdings können nur Oberflächen mit einem spektralen Verhalten untersucht werden, welche eine Absorption der von den LEDs erzeugten elektromagnetischen Anregungsstrahlung erlauben. Diese Einschränkung kann beispielsweise durch eine Kombination verschiedenfarbiger LEDs kompensiert werden.

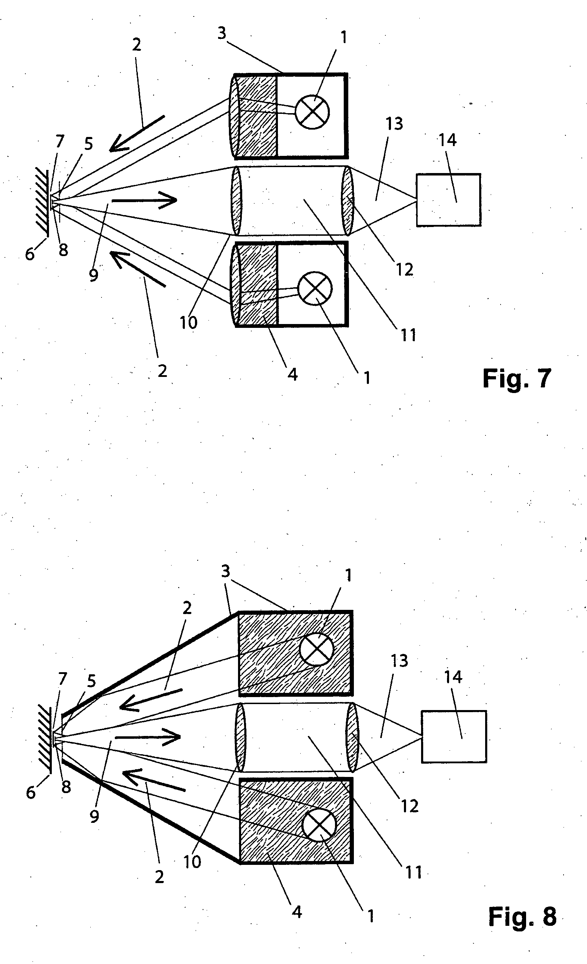

Je nach spektralem Empfindlichkeitsbereich des eingesetzten Infrarot-Sensors besteht dann die Möglichkeit, dass ein Teil der vom Prüfling reflektierten Anregungsstrahlung vom Infrarot-Sensor detektiert wird, was zu einer unerwünschten spektralen Überlagerung der Anregungsstrahlung mit der durch die Erwärmung erzeugten Wärmestrahlung führt. Um diese spektrale Überlagerung zu vermeiden, ist es vorteilhaft, unmittelbar vor den/der Blitzlampen eine Filtervorrichtung zur Abtrennung infraroter Spektralanteile aus der von den/der Blitzlampen generierten Strahlung zu platzieren. Eine bevorzugte Ausgestaltung der Filtervorrichtung besteht aus einer für die Anregungsstrahlung transparenten Gehäuse gefüllt mit einer Flüssigkeit (z.B. Wasser), die im spektralen Empfindlichkeitsbereich des Infrarot-Sensors absorbierend wirkt. In einer besonders bevorzugten Ausgestaltung der Erfindung (Fig. 8) ist die Anregungsquelle in das Filtermedium eingebettet. Falls eine Flüssigkeit als Filtermedium verwendet wird, kann diese in einer bevorzugten Ausgestaltung durch einen Wärmetauscher gepumpt und gekühlt werden, was eine aktive Kühlung der Anregungsquelle gewährleistet.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Schnittzeichnung durch eine Vorrichtung gemäss einem ersten Ausführungsbeispiel der Erfindung;
- Fig. 2: eine schematische Schnittzeichnung durch eine Vorrichtung gemäss einem zweiten Ausführungsbeispiel der Erfindung;
- Fig. 3: eine schematische Schnittzeichnung durch eine Vorrichtung gemäss einem dritten Ausführungsbeispiel der Erfindung;
- Fig. 4: eine schematische Schnittzeichnung durch eine Vorrichtung gemäss einem vierten Ausführungsbeispiel der Erfindung;
- Fig. 5: eine schematische Schnittzeichnung durch eine Vorrichtung gemäss einem fünften Ausführungsbeispiel der Erfindung;
- Fig. 6: eine schematische Schnittzeichnung durch eine Vorrichtung gemäss einem sechsten Ausführungsbeispiel der Erfindung;
- Fig. 7: eine schematische Schnittzeichnung durch eine Vorrichtung gemäss einem siebten Ausführungsbeispiel der Erfindung;
- Fig. 8: eine schematische Schnittzeichnung durch eine Vorrichtung gemäss einem achten Ausführungsbeispiel der Erfindung; und
- Fig. 9: eine schematische Schnittzeichnung durch eine Vorrichtung gemäss einem neunten Ausführungsbeispiel der Erfindung.

### BESCHREIBUNG BEVORZUGTER AUSFÜHRUNGSFORMEN

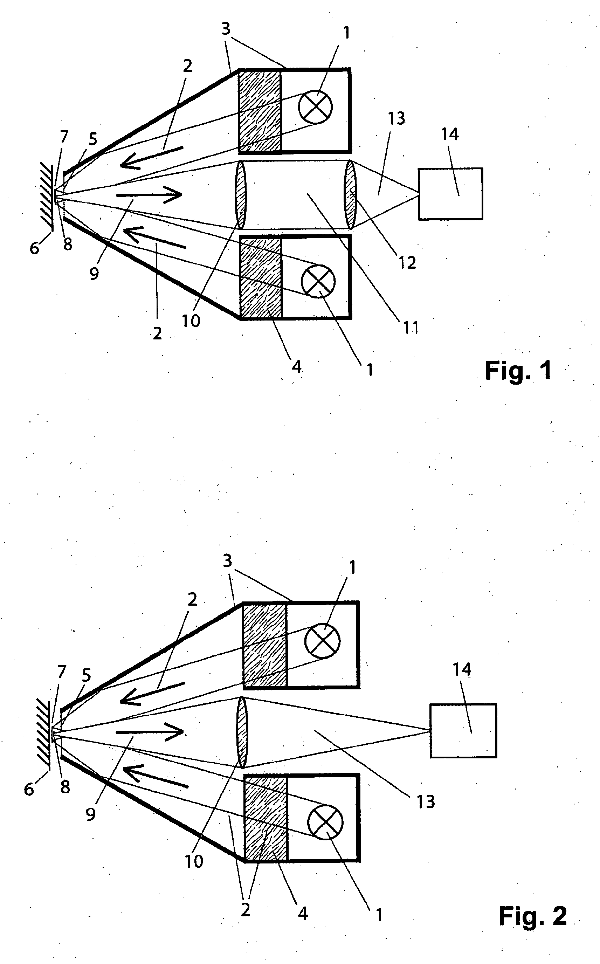

Die Figuren 1 bis 9 zeigen jeweils eine schematische Schnittzeichnung durch eine Vorrichtung gemäss einem ersten Ausführungsbeispiel der Erfindung; Gleiche oder ähnliche Merkmale sind in allen Figuren jeweils mit den gleichen Bezugszeichen belegt.

Es besteht mindestens eine Strahlungsquelle 1, die vorzugsweise mindestens an zwei gegenüberliegenden Seiten, wie in der Fig. 1 gezeigt, Anregungsstrahlung 2 auf einen Prüfbereich 7 einer zu prüfenden Oberfläche 6 fokussiert. Dabei wird mit der sehr schematischen parallelen Darstellung der Anregungsstrahlung 2 die Funktion des unten beschriebenen Konzentrators vorweggenommen. Die Anregungsstrahlung 2 wird dabei durch diese Strahlungsquellen 1 erzeugt, bei denen es sich insbesondere um eine oder mehrere ringförmig angeordnete Blitzlampen handeln kann. Damit wäre der Querschnitt der Fig. 1 eine rotationssymmetrische Darstellung um die durch den Pfeil 9 gebildete Längsachse der Vorrichtung.

Die Blitzlampen 1 sind in einem einen einseitig offenen Torus einer Reflexionsfläche 3 angeordnet, der an seiner einseitigen Öffnung über einen Ringförmigen Filter 4 verfügt. Die Filtervorrichtung 4 ist zur Abtrennung infraroter Spektralanteile des Lichtes der Blitzlampen 1 ausgelegt.

Die Anregungsstrahlung 2 durchtritt diese Filter und wird von der zur Bündelung und Führung der Anregungsstrahlung beschriebene Vorrichtung, im folgenden Konzentrator genannt, auf die zu prüfende Oberfläche 7 geleitet. Bei einer bevorzugten Ausführungsform weist der Konzentrator wie in Fig. 1 dargestellt eine sich kegelförmig verengende Reflexionsfläche 3 auf, wobei der Öffnungswinkel des Kegels einen Winkel von 10°-80° hat. Diese Anordnung der Reflexionsflächen 3 führt das Licht besonders effizient zur Austrittsöffnung 5. Mit anderen Worten, die Reflexionsflächen 3 bilden in diesem Bereich einen auf beiden Seiten offenen hohlen Kegelstumpf. Auf der einen Seite ist es eine vorzugsweise kreisrunde oder durch einen Polygonzug berandete Austrittsöffnung 5, auf der gegenüberliegenden Seite die durch den Kreisfilter 4 und eine innere Sammellinse abgeschlossene grössere Durchtrittsfläche.

Die kegelstumpfförmigen Reflexionsflächen können auch die Form eines Pyramidenstumpfes oder eines durch Trapeze begrenzten sich verjüngenden Hohlkörpers haben, dessen beiden Öffnungen dann durch Polygonzüge gebildet sind. Eine Kegelstümpfform ist bei einer ringkreisförmigen Blitzlampe 1 besonders sinnvoll, ein Pyramidenstumpf bei zwei oder vier Blitzlampen 1, ein Polygonzug eines Octogons bei vier oder acht Blitzlampen 1. Alle diese sich von einer grossen Öffnung auf Seite der Blitzlampe(n) 1 zu dem Prüfungsbereich 7 und der Öffnung 5 verjüngenden hohlen, um die Achse 9 spiegelsymmetrischen Reflexionskörper werden hier ein Kegelstumpf genannt. Die den Prüfbereich 7 bestimmende Öffnung 5 weist vorteilhafterweise eine Apertur von 0.1 bis 10 Zentimeter auf, was bei nicht runder Öffnung 5 durch den Durchmesser zwischen den einzelnen gegenüberliegenden Abschnitten der Polygonzüge vorgegeben wird.

Bei einer bevorzugten Ausführungsform besteht die Reflexionsfläche des Konzentrators zumindest gegen innen aus einem hochreflektierenden Material mit einer Reflektivität von 20% bis 100%, welches das Licht besonders verlustfrei zur Austrittsöffnung 5 führt.

Bei einer weiteren bevorzugten Ausführungsform besteht dieses hochreflektierende Material aus Aluminium.

Bei einer weiteren bevorzugten Ausführungsform besteht dieses hochreflektierende Material aus Edelstahl, welches besonders günstig in den Herstellungskosten ist. Durch Polieren der inneren Oberfläche kann der Anteil der Anregungsstrahlung, welcher zur Prüffläche 7 geführt wird, weiter gesteigert werden.

Bei einer weiteren bevorzugten Ausführungsform besteht dieses hochreflektierende Material aus Gold, welches eine besonders geringe Emissivität im infraroten Spektralbereich aufweist.

Durch die geringe Emissivität der Goldoberfläche ist die Überlagerung der gemessenen infraroten Strahlung aus dem Prüfbereich und den Innenflächen des Konzentrators besonders gering. Mit anderen Worten, der Anteil der Wärmestrahlung, der von den Reflexionsflächen 3 selber abgegeben wird und ebenfalls vom Detektor erfasst werden kann, ist sehr klein.

Um einen wohldefinierten Messbereich zu erzeugen, wird in einer bevorzugten Ausführungsform der Detektor 14 mittels einer geeigneten Vorrichtung wie nachstehend beschrieben auf die Oberfläche abgebildet.

Die in Fig. 1 dargestellte Abbildungsvorrichtung besteht aus zwei auf der zentralen Achse entlang dem Pfeil 9 angeordneten Linsen 10 und 12. Vorzugsweise ist die dem Prüfbereich zugewandte Sammellinse 10 örtlich nicht vor der Ebene angeordnet, die durch die Mündung des Kegels der Reflexionsflächen 3 definiert ist. Mit anderen Worten, diese Linse 10 liegt im Schatten des durch die Filterelemente 4 heraustretenden Lichtanteile der Blitzlampen 1. Die Sammellinse 10 kollimiert die vom Prüfbereich 7 abgestrahlte Detektionsstrahlung, die durch den Pfeil 9 auf der Längsachse der Vorrichtung symbolisiert wird. Eine weitere Fokussierlinse 12 hat die Aufgabe, die kollimierte Strahlung 13 auf den Detektor zu führen. In einer besonders bevorzugten Ausführung ist der Abstand der Sammellinse 10 zum Messbereich 7 bzw. Fokussierlinse 12 zum Detektor 14 gleich der Brennweite der beiden Linsen 10 bzw. 12. Der Bereich des parallelen Strahlenbündels 11 ist so gewählt, dass der Detektor 14 sicher hinter dem Reflexionstorus angeordnet ist und somit keine indirekte Strahlung von den Innen- oder Aussenflächen der Reflexionsflächen 3 aufnehmen kann, was zudem durch eine entsprechende in der Fig. 1 nicht dargestellte Blendenöffnung um die Taille des Fokussierkegels 13 gewährleistet wird.

Die Fig. 2 zeigt eine alternative Abbildungsvorrichtung bestehend aus nur einer Linse 10. In einer zu bevorzugenden Anordnung ist diese Linse 10 in der Mitte zwischen Messbereich 7 und Detektor 14 positioniert, wobei ihre vierfache Brennweite dem Abstand zwischen Messbereich 7 und Detektor 14 entspricht. Die sonstigen Merkmale dieses Ausführungsbeispiels entsprechenden denen des Ausführungsbeispiels der Fig. 1. Insbesondere kann statt einer Ringblitzlampe 1 auch eine Vielzahl von einzelnen Blitzlampen 1 in dem einseitig offenen Reflexionstorus vorgesehen sein oder es sind einzelne auf einer Seite offene Zylinder mit eingesetzten einzelnen Blitzlampen 1 vorgesehen, was jeweils in der Darstellung der Fig. 2 möglich wäre.

In einer weiteren zu bevorzugenden Ausführungsform handelt es sich bei dem Detektor 14 um einen Halbleiterdetektor. Halbleiterdetektoren sind besonders empfindlich und haben kurze Ansprechzeiten. Bei einer besonderen Ausführungsform hat dieser Halbleiterdetektor einen Empfindlichkeitsbereich zwischen 2 Mikrometer und 20 Mikrometer und Ansprechzeiten zwischen 1 Nanosekunde und 1 Sekunde. Peltier oder Stickstoffgekühlte Halbleiterdetektoren sind aufgrund ihrer hohen Empfindlichkeit und ihres geringen Rauschverhattens besonders zu bevorzugen. Die Verwendung von Bolometern als Detektor für die Detektionsstrahlung ermöglicht eine besonders preisgünstige Herstellung.

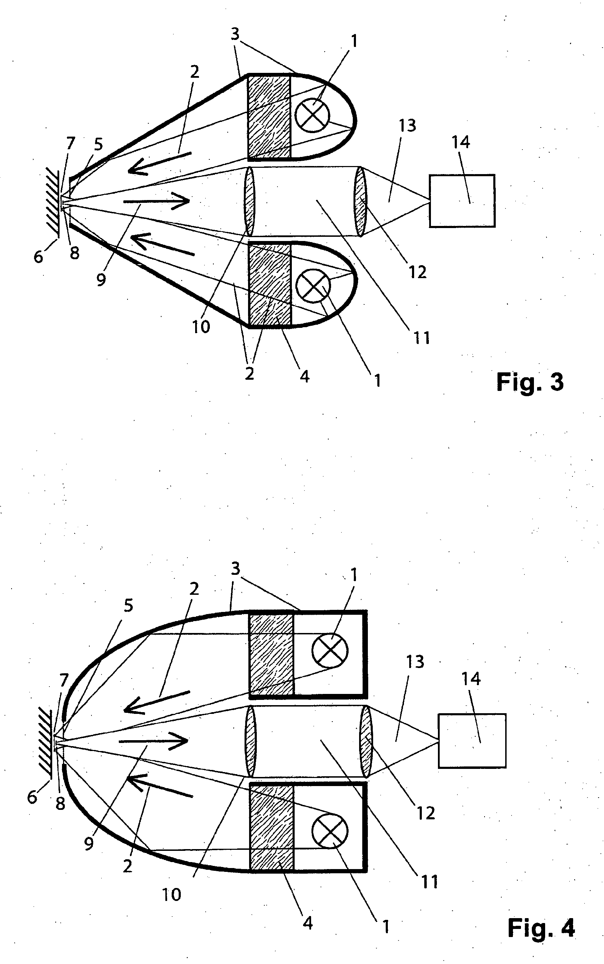

Der dem Prüfbereich abgewandte Teil der Reflexionsvorrichtung 3 kann in einer weiteren besonders zu bevorzugenden Anordnung durch gekrümmte Reflexionsflächen realisiert werden, wie in Fig. 3 dargestellt wurde. Dadurch wird auch der rückwärtig abgestrahlte Anteil der Anregungsstrahlung besonders effizient zum Prüfbereich geführt werden, was durch den um den Pfeil 2 der Anregungsstrahlung angedeuteten Strahlungsverlauf verdeutlicht wird.

Die in Fig. 4 dargestellte Ausführungsform weist gekrümmte Reflexionsflächen 3 auf, welche die Anregungsstrahlung 2 besonders effizient zum Prüfbereich führen, was durch den um den Pfeil 2 der Anregungsstrahlung angedeuteten Strahlungsverlauf verdeutlicht wird. Dabei verringert sich der Krümmungsradius im Querschnitt von einem tangentialen stetigen Verlauf am Reflexionstorus im Bereich der Filter 4 bis zu einer senkrecht zum Pfeil 9 stehenden Reflexionswand im Bereich der Öffnung 5, was letztendlich dann genau diese Öffnung 5 definiert.

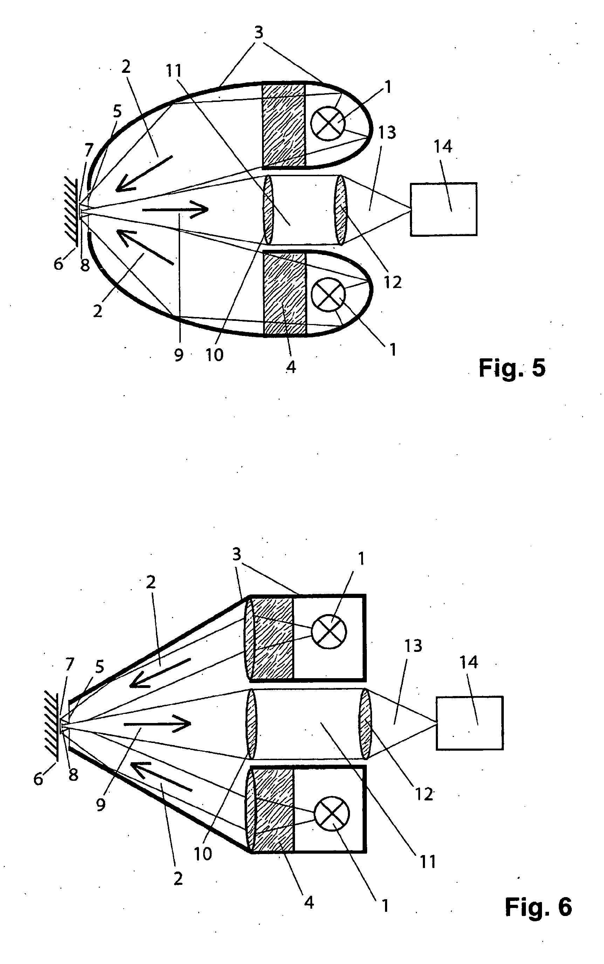

Bei einer weiteren in der Fig. 5 dargestellten bevorzugten Ausführungsform hat der Konzentrator Reflexionsflächen 3, die sich durch eine polynomische Funktion annähern lassen, insbesondere durch eine Funktion wie f(x) = x*x. Diese führen das Licht besonders effizient zur Austrittsöffnung 5.

Bei einer weiteren bevorzugten Ausführungsform hat der Konzentrator im Querschnitt hyperbolische Reflexionsflächen 3. Diese führen das Licht ebenfalls besonders effizient zur Austrittsöffnung 5.

Bei einer weiteren bevorzugten Ausführungsform hat der Konzentrator im Querschnitt elliptische Reflexionsflächen 3. Diese führen das Licht besonders effizient zur Austrittsöffnung 5. Insbesondere ist eine Verkippung um 10° - 80° des aufgespannten Ellipsoids zur Achse 9 mit einem der beiden Brennpunkten am Ort der Anregungsquelle 1 und dem anderen Brennpunkt am Ort des Messbereichs 7 besonders zu bevorzugen.

Die in Fig. 5 dargestellte Ausführungsform weist vorderseitig und rückseitig reflektierende Reflexionsflächen 3 auf.

In der in Fig. 6 dargestellten Ausführungsform wird das Licht zusätzlich zu den Reflexionsflächen 3 durch gekrümmte Oberflächen im Bereich der Filter 4 zum Prüfbereich geführt. Bei den gekrümmten Oberflächen kann es sich einerseits um angesetzte Linsen handeln als auch um eine Krümmung der Oberfläche des Filtermediums 4. Die Brennweite ist so zu wählen, dass der Taillendurchmesser von der Abbildung der Lichtquellenelemente (Gasentladungsstrecke, Wendel etc.) der Anregungsstrahlung ungefähr der Grösse der Öffnung 5 entspricht und liegt je nach Abstand zur prüfenden Oberfläche 6 typischerweise zwischen 0.01 m - 2 m.

In der in Fig. 7 dargestellten Ausführungsform wird die Anregungsstrahlung nur durch die optische Brechung an diesen eine Krümmung der Oberfläche des Filtermediums 4 bewirkenden angesetzten Linsen zum Prüfbereich 5 gelenkt.

Bei dem Ausführungsbeispiel der Fig. 8 sind die Blitzlampen 1 direkt in das Filtermedium 4 eingebettet.

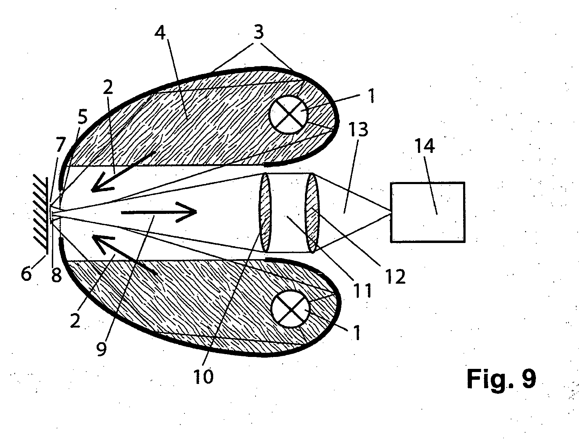

Die in Fig. 9 dargestellte Ausführungsform stellt eine Kombination von besonders zu bevorzugenden Merkmalen mit gekrümmten Reflexionsflächen 3 des rückseitigen und vorderseitigen Teil der Reflexionsvorrichtung und einer elektromagnetischen Anregungsquelle 1, die in das Filtermedium 4 eingebettet ist, dar. Diese Ausführungsform ermöglicht eine besonders effiziente Führung der elektromagnetischen Anregungsstrahlung 1 und eine kompakte Bauform. Bei einem solchen Filtermedium kann es sich insbesondere um Wasser handeln. Dabei wird das Wasser in einer wasserdichten Ausführung der Reflexionsvorrichtung gehalten, welche durch eine für die Anregungstrahlung transparente Scheibe bevorzugt aus Glas abgeschlossen wird. Die Verbindung zwischen der Reflexionsvorrichtung und der Scheibe kann bevorzugt durch ein Klebemittel oder eine Gummidichtung erfolgen. Das Anpressen der Scheibe gegen eine Gummidichtung kann bevorzugt durch eine Verschraubung erfolgen. Ein kontinuierlicher Austausch des Wassers für den Einsatz als Kühlmittel kann dadurch erfolgen, dass ein Zulauf des Wassers über einen Durchbruch bevorzugt an der unteren, Seite und der Ablauf über einen Durchbruch bevorzugt an der oberen Seite der Reflexionsvorrichtung erfolgt.

In einer weiteren bevorzugten Ausführungsform kann die von der Abbildungsvorrichtung gebündelte Detektionsstrahlung 9, 11, 13 in einen Lichtleiter eingekoppelt und über diesen Lichtleiter einem Detektor zugeführt werden.

Die verschiedenen Ausführungsformen der Erfindung ermöglichen die Bestimmung der Schichtdicke von Beschichtungen, sowie deren thermischen Eigenschaften wie Diffusivität und der Effusivität bzw. der thermischen Leitfähigkeit und der Wärmekapazität; als auch die Ermittlung von Haftungseigenschaften von Beschichtungen.

**BEZUGSZEICHENLISTE**

| | | | |
|---|---|---|---|
| 1 | Strahlungsquelle | 8 | Messbereich |
| 2 | Anregungsstrahlung | 9 | Detektionsstrahlung |
| 3 | Reflexionsfläche | 10 | Sammellinse |
| 4 | Filtervorrichtung | 11 | Parallelstrahlenbündel |
| 5 | Öffnung | 12 | Fokussierlinse |
| 6 | zu prüfende Oberfläche | 13 | Fokussierkegel |
| 7 | Prüfbereich | 14 | Detektor |

## Patentansprüche

1. Vorrichtung zur berührungslosen und zerstörungsfreien Prüfung einer Oberfläche durch die Messung seiner Infrarotstrahlung, mit einer oder mehreren inkohärenten elektromagnetischen Strahlungsquellen (1) und mit einem auf einer Detektionsachse (9) angeordneten Detektor (14), wobei die Strahlungsquelle oder Strahlungsquellen (1) in einem radialen Abstand zu der Detektionsachse (9) in einem Abstand von einem Prüfbereich (7) angeordnet ist bzw. sind, und wobei diese eine oder mehreren Strahlungsquellen (1) eingerichtet sind, um eine pulsartige oder intensitätsmodulierte Anregungsstrahlung (2) zu erzeugen, mit der die zu prüfende Oberfläche (6) in dem Prüfbereich (7) beaufschlagt wird, wobei die von einem Messbereich (8) der zu prüfenden Oberfläche (6) abgegebene Detektionsstrahlung dem Detektor (14) zugeführt wird, wobei die Vorrichtung eingereichtet ist, um die Anregungsstrahlung von der oder den Strahlungsquellen (1) zu der Detektionsachse (9) geneigt dem Prüfbereich (7) zuzuführen, wobei der Detektor (14) auf der Detektionsachse (9) räumlich weiter weg von dem Prüfbereich (7) angeordnet ist als die Strahlungsquelle oder Strahlungsquellen (1), wobei auf der Detektionsachse (9) eine Abbildungsvorrichtung (10, 12) zur Abbildung des Prüfbereich (7) auf die Messfläche des Detektors (14) vorgesehen ist, die in der Aussparung einer ringförmigen Strahlungsquelle oder zwischen den Strahlungsquellen (1) angeordnet ist, **dadurch gekennzeichnet, dass** zwischen der oder den Strahlungsquellen (1) und dem Prüfbereich (7) eine oder mehrere optische Filtervorrichtungen (4) angeordnet sind, die eingerichtet sind, um die Anregungsstrahlung (2) auf den Prüfbereich (7) zu führen, wobei die Filtervorrichtungen (4) ausgestaltet sind, ein oder mehrere spektrale Bereiche der erzeugten Anregungsstrahlung (2) zu absorbieren, und dass eines oder mehrere durch Filtermedien gebildeten Filtervorrichtungen (4) zur Wärmeableitung einer oder mehrerer Strahlungsquellen (1) dienen.

2. Vorrichtung gemäss Anspruch 1, **dadurch gekennzeichnet, dass** die dem Prüfbereich (7) zugewandte Seite der Filtervorrichtungen (4) eine gekrümmte Oberflächen aufweist oder zusätzliche Linsen umfasst, um die gefilterte Anregungsstrahlung (2) auf den Prüfbereich (7) zu lenken.

3. Vorrichtung gemäss einem der Ansprüche 1 oder 2, **dadurch gekennzeichnet, dass** eine oder mehrere elektromagnetische Strahlungsquellen (1) in einem oder mehreren der durch Filtermedien gebildeten Filtervorrichtungen (4) eingebettet sind.

4. Vorrichtung gemäss einem der Ansprüche 1 bis 3, **dadurch gekennzeichnet, dass** eine Reflexionsvorrichtung vorgesehen ist, die über Reflexionsflächen (3) verfügt, die einen kegelstumpfförmigen Konus aufweisen, der eine zum Prüfbereich (7) hin sich verengende und eine den Prüfbereich (7) bestimmende Öffnung (5) aufweist.

5. Vorrichtung gemäss Anspruch 4, **dadurch gekennzeichnet, dass** die den Prüfbereich (7) bestimmende Öffnung (5) eine Apertur von 0.1 bis 10 Zentimeter aufweist,

6. Vorrichtung gemäss einem der Ansprüche 1 bis 5, **dadurch gekennzeichnet, dass** die Abbildungsvorrichtung (10, 12) die durch die Öffnung (5) der Reflexionsvorrichtung (3) hindurchtretende und vom Prüfbereich (7) abgegebene Detektionsstrahlung (9, 11, 13) in einem durch die Abbildungsvorrichtung (10, 12) definierten Messbereich (8), zum Detektor (14) führt.

7. Vorrichtung gemäss einem der Ansprüche 1 bis 6, **dadurch gekennzeichnet, dass** die Abbildungsvorrichtung eine Sammellinse (10) aufweist, welche die vom Messbereich (8) abgegebene Detektionsstrahlung (9) sammelt und in ein paralleles Strahlenbündel (11) umformt.

8. Vorrichtung gemäss einem der Ansprüche 1 bis 7, **dadurch gekennzeichnet, dass** die Abbildungsvorrichtung eine Fokussierlinse (12) aufweist, welche die Detektionsstrahlung (11) auf den Detektor (14) abbildet.

9. Vorrichtung gemäss einem der Ansprüche 1 bis 8, **dadurch gekennzeichnet, dass** eine Reflexionsvorrichtung oder ein Wellenleiter vorgesehen ist, mit der die vom Messbereich (8) abgegebene Detektionsstrahlung (9) zum Detektor (14) geführt wird.

10. Verwendung der Vorrichtung gemäss einem der Ansprüche 1 bis 9 für die Bestimmung der Dicke, der thermischen Diffusivität, der thermischen Effusivität, der thermischen Leitfähigkeit, der Wärmekapazität, der Dichte, der Haftung, der Porosität, der Zusammensetzung, dem Verhärtungsgrad oder der Phase von einer oder mehrerer auf einer Unterlage aufgebrachten Beschichtungen.

## Claims

1. A device for the contactless and non-destructive testing of a surface by measuring the infrared radiation thereof with one or more incoherent electromagnetic radiation sources (1) and with a detector (14) arranged on a detection axis (9), wherein the radiation source or sources (1) is, resp. are arranged at a radial distance from the detection axis (9) at a distance from a testing area (7), and wherein this or these radiation sources (1) are configured to generate a pulse-like or intensity-modulated excitation radiation (2) which can be applied to the surface (6) to be tested in the testing area (7), wherein the detection radiation emitted by the measuring area (8) of the surface (6) to be tested can be fed to the detector (14), wherein the device is configured to feed the excitation radiation from the radiation sources (1) to the testing area (7) at an inclination to the detection axis (9), wherein the detector (14) on the detection axis (9) is arranged spatially further away from the testing area (7) than the radiation source or sources (1), wherein an imaging device (10, 12) for mapping the testing area (7) onto the measuring surface of the detector (14) is provided on the detection axis (9), which imaging device is arranged in a recess of an annular radiation source or between the radiation sources (1), **characterised in that** one or more optical filter devices (4) are arranged between the radiation source or sources (1) and the testing area (7), the optical filter devices (4) being configured t guide the excitation radiation (2) to the testing area (7), wherein the filter devices (4) are configured to absorb one or more spectral ranges of the generated excitation radiation (2), and **in that** one or more of the filter devices (4) formed by filter media are used for the dissipation of heat from one or more radiation sources (1).

2. Device according to claim 1, **characterised in that** the side of the filter devices (4) facing the testing area (7) comprises a curved surface or additional lenses in order to direct the filtered excitation radiation (2) onto the testing area (7).

3. Device according to claim 1 or 2, **characterised in that** one or more electromagnetic radiation sources (1) are embedded into one or more of the filter devices (4) formed by filter media.

4. Device according to one of claims 1 to 3, **characterised in that** a reflection device is provided which comprises reflection surfaces (3) which comprise a truncated-cone-shaped cone which comprises an opening (5) narrowing towards the testing area (7) and determining the testing area (7).

5. Device according to claim 4, **characterised in that** the opening (5) determining the testing area (7) comprises an aperture of between 0.1 and 10 centimetres.

6. Device according to one of claims 1 to 5, **characterised in that** the imaging device (10, 12) directs the detection radiation (9, 11, 13) passing through the opening (5) of the reflection device (3) and emitted by the testing area (7) to the detector (14) in a measuring area (8) defined by the imaging device (10, 12).

7. Device according to one of claims 1 to 6, **characterised in that** the imaging device comprises a collecting lens (10) which collects the detection radiation (9) emitted by the measuring area (8) and converts it into a parallel bundle of rays (11).

8. Device according to one of claims 1 to 7, **characterised in that** the imaging device comprises a focussing lens (12) which maps the detection radiation (11) onto the detector (14).

9. Device according to one of claims 1 to 8, **characterised in that** a reflection device or a wave guide is provided with which the detection radiation (9) emitted from the measuring area (8) is directed to the detector (14).

10. A use of the device according to one of claims 1 to 9 for determining the thickness, the thermal diffusivity, the thermal effusivity, the thermal conductivity, the heat capacity, the density, the adhesion, the porosity, the composition, the degree of hardening or the phase of one or more coatings applied to a substrate.

## Revendications

1. Un dispositif pour le contrôle non destructif et sans contact d'une surface par mesure de la radiation infrarouge de celle-ci, ayant une ou plusieurs sources de rayonnement électromagnétique incohérentes (1) et ayant un détecteur (14) situé sur un axe de détection (9), où la source de rayonnement ou les sources de rayonnement (1) sont situées à une distance radiale de l'axe de détection (9) dans une distance de la zone de contrôle (7), et où cette une ou plusieurs sources de rayonnement (1) sont configurées pour produire un rayonnement d'excitation (2) de type pulse ou à intensité modulée avec lequel la surface à contrôler (6) est touchée dans la zone de contrôle (7), ou le rayonnement de détection d'une région de contrôle (8) de la surface à contrôler (6) émis est acheminé vers le détecteur (14), où le dispositif est configuré pour acheminer le rayonnement d'excitation depuis la source de rayonnement ou les sources de rayonnement (1) vers la zone de contrôle (7) de manière inclinée par rapport à l'axe de détection (9), où le détecteur (14) est disposé de manière plus éloignée sur l'axe de détection (9) de la zone de contrôle (7) que la source de rayonnement ou les sources de rayonnement (1), où sur l'axe de détection (9) un dispositif d'imagerie (10, 12) pour la représentation de la zone de contrôle (7) sur la surface de mesure du détecteur (14) est prévu dans un évidement d'une source de rayonnement en forme annulaire ou entre les sources de rayonnement (1), **caractérisé en ce que** entre la source de rayonnement ou les sources de rayonnement (1) et la zone de contrôle (7) un ou plusieurs dispositifs de filtration optique (4) sont arrangés, lesquels sont configurés pour acheminer le rayonnement d'excitation (2) sur la zone de contrôle (7), où les dispositifs de filtrage (4) sont configurés pour absorber un ou plusieurs domaines spectraux du rayonnement d'excitation produit, et que les dispositifs de filtration (4) formés d'un ou plusieurs milieux filtrants servant à l'évacuation de la chaleur d'une ou plusieurs sources de rayonnement (1).

2. Dispositif selon la revendication 1, **caractérisé en ce que** le côté de dispositif de filtration (4) faisant face à la zone de contrôle (7) présente une surface courbée ou comprend des lentilles supplémentaires, pour guider le rayonnement d'excitation (2) filtré sur la zone de contrôle (7).

3. Dispositif selon une des revendications 1 ou 2, **caractérisé en ce que** une ou plusieurs source de rayonnement électromagnétique (1) sont intégrées dans un ou plusieurs dispositifs de filtration (4) formé par les milieux filtrants.

4. Dispositif selon une des revendications 1 à 3, **caractérisé en ce que** un dispositif de réflexion est prévu, qui dispose de surfaces de réflexion (3), qui présente un cône en forme de cône tronqué qui présente une ouverture (5) se rétrécissant vers la zone de contrôle (7) et déterminant la zone de contrôle (7).

5. Dispositif selon la revendication 4, **caractérisé en ce que** l'ouverture (5) déterminant la zone de contrôle (7) présente une ouverture de 0.1 à 10 centimètres.

6. Dispositif selon une des revendications 1 à 5, **caractérisé en ce que** le dispositif d'imagerie (10,12) achemine le rayonnement de détection (9,11,13) traversant l'ouverture (5) du dispositif de réflexion (3) émis par la zone de contrôle (7) vers le détecteur (14) dans un domaine de mesure (8) défini par le dispositif d'imagerie (10,12).

7. Dispositif selon une des revendications 1 à 6, **caractérisé en ce que** le dispositif d'imagerie présente une lentille collectrice (10) qui collecte le rayonnement de détection (9) émis par le domaine de mesure (8) et le transforme en un faisceau de rayonnement (11).

8. Dispositif selon une des revendications 1 à 7, **caractérisé en ce que** le dispositif d'imagerie présente une lentille de focalisation (12) qui représente le rayonnement de détection (11) sur le détecteur (14).

9. Dispositif selon une des revendications 1 à 8, **caractérisé en ce que** un dispositif de réflexion ou un guide d'onde avec lequel le rayonnement de détection (9) émis par le domaine de mesure (8) est acheminé vers le détecteur (14).

10. Utilisation du dispositif selon une des revendications 1 à 9 pour la détermination de l'épaisseur, de la diffusivité thermique, de l'effusivité thermique, de la conductivité thermique, de la capacité thermique, de la densité, de l'adhérence, de la porosité, de la composition, du degré de solidification ou de la phase d'un ou plusieurs revêtements déposés sur un support.
